Europäisches Patentamt

European Patent Office

Office européen des brevets

(11) Numéro de publication: **0 279 496 B1**

# FASCICULE DE BREVET EUROPEEN

(45) Date de publication de fascicule du brevet:
**22.01.92**

(51) Int. Cl.⁵: **A21D 6/00**

(21) Numéro de dépôt: **88200277.7**

(22) Date de dépôt: **16.02.88**

(54) **Composition améliorée de farine et méthode de préparation.**

(30) Priorité: **20.02.87 BE 8700149**

(43) Date de publication de la demande:
**24.08.88 Bulletin 88/34**

(45) Mention de la délivrance du brevet:
**22.01.92 Bulletin 92/04**

(84) Etats contractants désignés:
**CH DE FR GB LI LU NL**

(56) Documents cités:
**FR-A- 380 321**
**FR-A- 1 396 772**
**FR-A- 2 351 603**
**US-A- 3 077 408**

(73) Titulaire: **Vanherpe, Johan**
**Schippersstraat 11**
**B-3500 Hasselt(BE)**

(72) Inventeur: **Vanherpe, Johan**
**Schippersstraat 11**
**B-3500 Hasselt(BE)**

(74) Mandataire: **Donné, Eddy**
**Bureau M.F.J. Bockstael nv Arenbergstraat 13**
**B-2000 Antwerpen(BE)**

Rank Xerox (UK) Business Services

## Description

La présente invention se rapporte à une composition améliorée de farine, plus particulièrement de farine de froment, ainsi qu'à une méthode de préparation de cette composition.

On sait que, lors de la fabrication de farine, on utilise des espèces de froment de qualités différentes. Comme farine de froment, on peut distinguer principalement la farine de qualité courante qui possède en général 10 à 12 % de portéines et la farine de qualité supérieure qui possède en général 13 à 15 % de protéines. La qualité du froment, et de la farine qu'il produit, dépend principalement d'une récolte à l'autre, ainsi que du pays d'origine. Ainsi, la farine européenne sera en général de qualité courante, mais dans une mesure moindre également de qualité supérieure, alors que la farine canadienne et américaine sera en général de qualité supérieure.

La farine de qualité supérieure n'a pas seulement l'avantage de contenir plus de protéines pour l'alimentation, mais d'offrir également d'excellentes qualités de cuisson pour les produits de la boulangerie. D'autre part, l'inconvénient subsiste cependant que la plus grande teneur en protéines de la farine, entraîne une augmentation du prix. On sait aussi qu'en général dans les boulangeries on établit un compromis entre le prix de la farine d'une part et ses qualités de cuisson de l'autre. Pour cela, on mélange de la farine européenne, en particulier de la farine de froment, de qualité courante, avec de la farine de qualité supérieure, tant d'origine européenne que canadienne et/ou américaine. Ce mélange peut être enrichi par l'addition de gluten vital.

On choisit la composition ci-dessus en fonction des produits à cuire. Ces derniers peuvent en général être classéas en deux groupes. Le premier groupe englobe le pain et produits similaires de la boulangerie, pour lesquels on utilise dans l'ensemble une composition de farine d'une teneur en protéines de 11% à 12%. Le deuxième groupe de produits se compose de pistolets et produits similaires de fine boulangerie. Ici, l'on choisira dans l'ensemble une composition de farine permettant d'obtenir une teneur moyenne en protéines de 12 à 14 %.

Des brevets FR-A-380.321 et FR-2.351.603 il est connu qu'on peut améliorer une farine de qualité ordinaire par traitement thermique, par un broyage plus fin ou par une combinaison de ces procédés. Ces méthodes envisagent la délibération augmentée d'amidon - en augmentant l'endommagement des grains d'amidon - éventuellement assistée par une désactivation d'enzymes et un changement dans l'albumine (si le froment est traité). Ces procédés peuvent baisser en certains cas la dimension moyenne des particules de la farine jusqu'à 40-50 $\mu$m. Les farines améliorées, contenant de la farine traitée selon un des procédés mentionnés ci-dessus, montrent un rendement augmenté dans la pâte et au four, et une conservation prolongée du pain des produits similaires. Pour les pistolets et les produits de fine boulangerie, pourtant, ces farines améliorées ne sont pas utiles.

On sait que, lors de la fabrication de farine, on peut exécuter ce qu'on appelle un déplacement de protéines afin d'obtenir, avec une farine de qualité courante, un produit de farine de qualité supérieure, dans ce cas avec une forte teneur en protéines. A cet effet, on réduit mécaniquement ou l'on micronise une farine de qualité courante, qui se compose de particules d'une dimension moyenne de 80 $\mu$m, pour obtenir un produit, qui se compose de particules d'une dimension moyenne de 17 à 19 $\mu$m. Pour cela, on fait usage de moulins spéciaux qui requièrent relativement beaucoup d'énergie. La farine micronisée est encore traitée ensuite en séparant les particules, par tamisage à courant d'air, ce qui exige aussi beaucoup d'énergie, en deux fractions, à savoir d'une part une fraction pauvre en protéines avec une teneur en protéines de 6 à 10% et une dimension de particules de 20 $\mu$m, et d'autre part une fraction riche en protéines avec une teneur en protéines de 17 à 23% et avec une dimension de particules de 10 $\mu$m. Ce qui est important ici, c'est que la fraction riche en protéines peut être utilisée pour augmenter la teneur en protéines de la farine de qualité courante et en améliorer la qualité de cuisson. Pour cela, on mélange une certaine quantité de la fraction riche en protéines de farine micronisée de qualité courante avec de la farine non micronisée de qualité courante, de façon à obtenir une composition ayant une teneur moyenne en protéines supérieure à celle de la farine ordinaire. Ce procédé a l'inconvénient que, lors de la micronisation de la farine de qualité courante, on ne peut en transformer que 25% en fraction riche en protéines comme dit ci-dessus, de sorte que les 75% restants n'entrent donc plus en ligne de compte pour les produits classiques de cuisson d'une boulangerie et/ou boulangerie fine.

La présente invention a également pour objet de fournir une composition améliorée de farine que ne présente pas l'inconvénient ci-dessous et qui offre quand même une bonne qualité de cuisson. D'autres avantages apparaîtront encore d'après la description ultérieure.

Les recherches de l'inventeur ont prouvé maintenant que, contre toutes suppositions, on peut également arriver à de meilleures qualités de cuisson sans qu'il soit nécessaire d'enlever les fractions pauvres en protéines de la farine micronisée. Ceci offre en particulier l'avantage qu'il ne faut plus exécuter de tamisage à courant d'air, ce qui supprime un équipement coûteux et une importante consommation d'énergie.

Suivant l'invention, la composition améliorée de farine réside donc principalement en une quantité de farine non micronisée de qualité courante, c'est-à-dire avec en général une teneur en protéines de moins de 12 %, et une quantité de farine micronisée, qui est également de qualité courante et qui est principalement ajoutée à la composition dans tous ses éléments.

Cette nouvelle composition possède la même qualité de cuisson que si l'on ajoutait de la farine de qualité supérieure et à teneur élevée en protéines à une farine de qualité ordinaire, européenne par exemple.

Les pourcentages suivant lesquels les quantités doivent être mélangées dépendent du genre de produit à cuire. Ainsi par exemple pour la production de pain et de produits similaires, on utilisera 50 à 80 % et même 50 à 90 % de farine de qualité courante dans son état primitif tandis que les 20 à 50 %, respectivement 10 à 50 %, restants sont formés à l'aide de farine de qualité courante modifiée par micronisation. Un avantage évident de ce mélange réside dans le fait que la qualité de cuisson en est meilleure que celle d'un mélange de 50 à 80 % de farine de qualité courante avec 20 à 50 % de farine de qualité supérieure et/ou un équivalent de gluten vital. D'autres avantages de la composition dans le pourcentage précité sont la meilleure absorption d'eau, la structure plus fine, le maintien de l'humidité de la mie de pain, le maintien des propriétés chimiques et le prix de revient plus intéressant.

Les avantages qui résultent de la structure plus fine résident principalement dans le fait que pour des produits de cuisson qui sont préparés avec la composition en pourcentage précitée, on obtient un liant plus homogène entre d'une part la farine, et d'autre part l'eau, la levure, les matières grasses et les améliorants du pain.

Comme la mie reste plus longtemps humide, le pain conserve plus longtemps sa fraîcheur.

Comme les propriétés chimiques ne changent pas, la farine conserve bien sa teneur normale en protéines, mais elle possède néanmoins les qualités de cuisson d'une composition ordinaire avec une teneur en protéines beauoup plus élevée.

Le prix de revient plus intéressant susmentionné de la composition précitée pour les produits de pain et similaires est dû au fait que l'usage de farines américaines et canadiennes, ainsi que de farines européennes chères, peut être réduit, de façon drastique car il est possible maintenant d'obtenir des qualités de cuisson tout aussi bonnes avec de la farine de qualité courante.

Lorsqu'on applique la composition suivant l'invention pour la production de pistolets, petits pains et produits similaires de fine boulangerie, il est à conseiller d'utiliser une composition contenant 20 à 50 % de farine de qualité courante et 50 à 80 % de farine micronisée, également de qualité courante. Les qualités du mélange sont principalement les mêmes que celles exposées ci-dessus pour le mélange utilisé pour la production de pain. La capacité d'absorption d'eau est cependant moins importante en comparaison avec le mélange ordinaire moins significatif alors que la différence de prix constitue actuellement certainement un important facteur intéressant vu qu'il n'est plus nécessaire d'avoir de grandes quantités de céréales étrangères.

Il est évident que la composition améliorée de farine suivant l'invention peut être encore complétée par des farines étrangères, bien que ceci ne soit pas indispensable.

La présente invention se rapporte encore aussi à une méthode permettant d'arriver à la composition de la farine. Cette méthode consiste principalement à modifier une quantité de farine de qualité courante en la micronisant, en ajoutant la quantité de farine micronisée à une quantité de farine de qualité courante non micronisée et en mélangeant les deux espèces de farine.

Bien que dans la description ci-dessus, il soit question principalement de farine de froment, l'invention est également applicable à la farine de froment partiellement complète et complète, à la farine d'autres céréales que le froment et à des farines de céréales mélangées.

## Revendications

1. Composition améliorée de farine comprenant une quantité de farine de qualité courante avec une teneur en protéines de moins du 12% dont les particles ont donc des dimensions moyennes au-dessus de 20 micromètres et une quantité d'autre farine, caractérisée en ce que cette autre farine est également de la farine de qualité courante mais micronisée, c'est-à-dire mécaniquement réduite jusqu'à ce que les particules aient des dimensions moyennes de 17 à 19 micromètres, cette farine micronisée étant ajoutée principalement dans tous ses éléments à la composition et ayant gardé toutes ses qualités chimiques et conservé sa teneur normale en protéines.

2. Composition améliorée de farine suivant la revendication 1 destinée à être utilisée pour la production de pain et de produits similaires, caractérisée en ce que la quantité de farine non micronisée représente 50 à 80 % de la composition, tandis que la farine micronisée constitue 20 à 50%.

3. Composition améliorée de farine suivant la revendication 1 destinée à être utilisée pour la production de pain et de produits similaires, caractérisée en ce que la quantité de farine non micronisée représente 50 à 90 % de la composition, tandis que la farine micronisée constitue 10 à 50%.

4. Composition améliorée de farine suivant la revendication 1 destinée à être utilisée pour la production de petits pains et produits similaires de boulangerie fine, caractérisée en ce que la quantité de farine non micronisée représente 20 à 50 % de la composition totale, tandis que la farine micronisée en constitue 50 à 80%.

5. Composition améliorée de farine suivant l'une ou l'autre revendications précédentes, caractérisée en ce que la farine consiste en farine de froment.

6. Procédé d'obtention d'une composition de farine suivant l'une ou l'autre des revendications 1 à 5 inclusivement, caractérisée en ce qu'il comprend la micronisation d'une quantité de farine de qualité courante, c'est-à-dire avec une teneur en protéines de 10 à 10% , par réduction mécanique jusqu'à ce que les particules ayent des dimensions moyennes de 17 à 19 micromètres et avec conservation de toutes ses qualités chimiques et de sa teneur normale en protéines et le mélange de cette quantité avec une quantité de farine non micronisée de qualité courante.

## Claims

1. Improved composition of flour containing a quantity of flour of regular quality with a protein content of less than 12% whose particles have an average dimension bigger than 20 micrometer and a quantity of another flour, characterized in that this other flour is also flour of regular quality, but micronized, i.e. mechanically reduced until the particles have an average dimension of 17 to 19 micrometer, whereby this micronized flour is mainly added to the composition with all its elements, and whereby all the chemical qualities and the normal protein content are preserved.

2. Improved composition of flour according to claim 1, meant to be used for the production of bread and similar products, characterized in that the quantity of non-micronized flour represents 50 to 80% of the composition, whereas the micronized flour represents 20 to 50%.

3. Improved composition of flour according to claim 1, meant to be used for the production of bread and similar products, characterized in that the quantity of non-micronized flour represents 50 to 90% of the composition, whereas the micronized flour represents 10 to 50%.

4. Improved composition of flour according to claim 1, meant to be used for the production of bread rolls and similar fine bakery products, characterized in that the quantity of non-micronized flour represents 20 to 50% of the composition. whereas the micronized flour represents 50 to 80% of it.

5. Improved composition of flour according to any of the above claims, characterized in that the flour consists of wheat flour.

6. Procedure to obtain a composition of flour according to any of claims 1 to 5 included, characterized in that a quantity of regular quality flour is micronized, i.e. with a protein content of 10 to 10%, by mechanical reduction until the particles have an average dimension of 17 to 19 micrometer while all chemical qualities and the normal protein content are preserved, and in that this quantity is mixed with a quantity of non-micronized flour of regular quality.

## Patentansprüche

1. Verbesserte Mehlmischung, bestehend aus einer Menge Mehl üblicher Qualität mit einem Proteingehalt von weniger als 12%, deren Teilchen also einer mittleren Grösse von über 20 Mikrometern sind und einer weiteren Menge Mehl, dadurch gekennzeichnet, daß diese Mehlsorte auch Mehl üblicher Qualität ist, jedoch mikronisiert, das heißt, mechanisch verkleinert bis die Teilchen eine mittlere Grösse von 17 bis 19 Mikrometern haben, wobei dieses mikronisierte Mehl hauptsächlich in allen seinen Elementen der Mischung zugesetzt wurde und alle seine chemische Eigenschaften behalten hat sowie seinen normalen Proteingehalt.

2. Verbesserte Mehlmischung nach Anspruch 1, bestimmt um bei der Herstellung von Brot und ähnlichen Produkten verwendet zu werden, dadurch gekennzeichnet, daß die nicht mikronisierte Mehlmenge 50 bis 80% der Mischung darstellt, während das mikronisierte Mehl 20 bis 50% darstellt.

3. Verbesserte Mehlmischung nach Anspruch 1, bestimmt um bei der Herstellung von Brot und ähnlichen Produkten verwendet zu werden, dadurch gekennzeichnet, daß die nicht mikronisierte Mehlmenge 50 bis 90% der Mischung darstellt, während das mikronisierte Mehl 10 bis 50% darstellt.

4. Verbesserte Mehlmischung nach Anspruch 1, bestimmt um bei der Herstellung von Brötchen und ähnlichen Produkten der Feinbäckerei verwendet zu werden, dadurch gekennzeichnet, daß die nicht mikronisierte Mehlmenge 20 bis 50% der Gesamtmischung darstellt, während das mikronisierte Mehl 50 bis 80% darstellt.

5. Verbesserte Mehlmischung nach irgendeiner der vorhergehenden Ansprüche, dadurch gekennzeichnet, daß das Mehl aus Weizenmehl besteht.

6. Herstellungsverfahren einer Mehlmischung nach irgendeiner der Ansprüche 1 bis 5 einschliesslich, dadurch gekennzeichnet, daß es besteht aus der Mikronisierung einer Mehlmenge üblicher Qualität, das heißt, mit einem Proteingehalt von 10 bis 10%, mechanisch verkleinert, bis die Teilchen eine mittlere Grösse von 17 bis 19 Mikrometern haben und unter Beibehaltung der chemischen Eigenschaften und des normalen Proteingehalts und die Vermischung dieser Menge mit einer Menge nicht mikronisiertem Mehl üblicher Qualität.